(19) **Europäisches Patentamt / European Patent Office / Office européen des brevets**

(11) **EP 2 456 220 B1**

(12) **EUROPEAN PATENT SPECIFICATION**

(45) Date of publication and mention
of the grant of the patent:
**19.10.2016 Bulletin 2016/42**

(51) Int Cl.:
*H04N 13/04* $^{(2006.01)}$

(21) Application number: **11166433.0**

(22) Date of filing: **17.05.2011**

(54) **Three dimensional image display device**

Vorrichtung zur Anzeige von dreidimensionalen Bildern

Dispositif d'affichage d'images tridimensionnelles

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2010 KR 20100115021**

(43) Date of publication of application:
**23.05.2012 Bulletin 2012/21**

(73) Proprietor: **Samsung Display Co., Ltd.
Gyeonggi-do (KR)**

(72) Inventors:
• **Kim, Jung-Won
125-701, Seoul (KR)**
• **Lee, Jun-Pyo
301-1702, Chungcheongnam-do (KR)**

• **Kim, Seon-Ki
202-1602, Gyeonggi-do (KR)**
• **Kim, Kang-Min
102-308, Seoul (KR)**

(74) Representative: **Dr. Weitzel & Partner
Patent- und Rechtsanwälte mbB
Friedenstrasse 10
89522 Heidenheim (DE)**

(56) References cited:
**US-A1- 2006 268 104**

• **JANUSZ KONRAD ET AL: "Cancellation of Image
Crosstalk in Time-Sequential Displays of
Stereoscopic Video", IEEE TRANSACTIONS ON
IMAGE PROCESSING, IEEE SERVICE CENTER,
PISCATAWAY, NJ, US, vol. 9, no. 5, 1 May 2000
(2000-05-01), XP011025583, ISSN: 1057-7149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

**(a) Technical Field**

The present invention relates to a display device, and more particularly, to a three dimensional image display device and a method of driving the three dimensional display device.

**(b) Discussion of the Related Art**

"Cancellation of image crosstalk in time-sequential displays of stereoscopic video" by Konrad et al., published in IEEE Transactions on Image Processing vol. 9, no. 5, May 2000, pp. 897-908, describes that stereoscopic visualization systems based on liquid crystal shutter (LCS) eyewear and cathode-ray tube (CRT) displays provide the best overall quality of three-dimensional images and therefore have a dominant position in commercial as well as professional markets. Due to the CRT and LCS characteristics, however, such systems suffer from perceptual crosstalk at object boundaries that can reduce, and at times inhibit, the ability to perceive depth.

In general, three dimensional (3D) image display technology allows viewers to perceive displayed imagery in three dimensions. This 3D effect generally uses the binocular parallax phenomenon. In binocular parallax, different 2D images are transmitted to the left eye and the right eye, and when the image transmitted to the left eye (hereafter, referred to as "left eye image") and the image transmitted to the right eye (hereafter, referred to as "right eye image") are transmitted to the brain, the left eye image and the right eye image are recognized as a three dimensional image and accordingly depth perception is made possible.

Display devices that use binocular parallax may be classified as either a stereoscopic type that uses shutter glasses and polarized glasses or as an autostereoscopic type that does not use glasses and instead makes use of a lenticular lens and a parallax barrier in the device.

According to the shutter glass type of 3D image display device, the left eye image and right eye image are alternately displayed and a left eye shutter and a right eye shutter of the shutter glasses are selectively opened and closed ensuring that the left eye image is prevented from being observed by the right eye of the viewer and the right eye image is prevented from being observed by the left eye of the viewer.

The shutter glass type can be easily switched between a 2D mode and a 3D mode and data is not lost in switching between the modes. However, crosstalk may occur when a difference in gray is large between the left image and the right image.

**SUMMARY**

It is the object of the present invention to reduce crosstalk.

This object is achieved by the subject matter of the independent claim. Preferred embodiments are defined in the sub claims.

An exemplary embodiment of the present invention provides a three dimensional image display device including a display device that includes a first region and a second region which are adjacent to each other. The display device alternately displays a left eye image and a right eye image and displays an image having a predetermined level of gray in a period between the display of the left eye image and the right eye image. In an exemplary embodiment, in a current frame, a white data voltage may be applied to the first region and a corrected white data voltage may simultaneously be applied to the second region. In an exemplary embodiment, the corrected white data voltage may be smaller than the white data voltage.

In the current frame, luminance represented in the first region and luminance represented in the second region may be substantially the same.

In a previous frame, a black data voltage may be applied to the first region and the white data voltage may be applied to the second region.

The predetermined level of gray may be black.

A voltage greater than the white data voltage may be applied to the first region.

In an exemplary embodiment, the display device may include a third region and a fourth region which are adjacent to each other. In an exemplary embodiment, in the current frame, the black data voltage may be applied to the third region and simultaneously a corrected black data voltage may be applied to the fourth region. In an exemplary embodiment, the corrected black data voltage may be larger than the black data voltage.

In the current frame, luminance represented in the third region and luminance represented in the fourth region may be substantially the same.

In a previous frame, the white data voltage may be applied to the third region and the black data voltage may be applied to the fourth region.

The three dimensional image display device may further include a shutter member including a left eye shutter and a right eye shutter.

The first region may represent a black gray and the second region may represent a white gray, in the previous frame, and luminance of the first region which is seen through the shutter member at the current frame and luminance of the second region which is seen through the shutter member at the current frame may be substantially the same.

In an exemplary embodiment, the display device may include a third region and a fourth region which are adjacent to each other. In an exemplary embodiment, in the current frame, the black data voltage may be applied to the third region and simultaneously the corrected black data voltage may be applied to the fourth region. In an exemplary embodiment, the corrected black data voltage may be larger than the black data voltage.

The third region may represent a white gray and the fourth region may represent a black gray, in a previous frame, luminance of the third region which is seen through the shutter member at the current frame and luminance of the fourth region which is seen through the shutter member at the current frame may be substantially the same.

Another exemplary embodiment of the present invention provides a three dimensional image display device including a display device that includes a first region and a second region which are adjacent to each other. The display device alternately displays a left eye image and a right eye image and displays an image having a predetermined gray in a period between the display of the left eye image and the right eye image.

In an exemplary embodiment, in a current frame, a black data voltage may be applied to the first region and a corrected black data voltage may simultaneously be applied to the second region. In an exemplary embodiment, the corrected black data voltage may be of a lower voltage than the black data voltage.

In the current frame, luminance represented in the first region and luminance represented in the second region may be substantially the same.

In the previous frame, a white data voltage may be applied to the first region and the black data voltage may be applied to the second region.

An exemplary embodiment of the present invention provides a method of driving a three dimensional image display device including in a display device including a first region and a second region which are adjacent to each other. The first and second display regions sequentially display a left eye image, an image having a predetermined gray, and a right eye image. Alternatively, the first and second display regions sequentially display a right eye image, an image having a predetermined gray, and a left eye image. In a current frame, a white data voltage is applied to the first region and simultaneously a corrected white voltage is applied to the second region. The corrected white data voltage may be smaller than the white data voltage.

In the current frame, luminance represented in the first region and luminance represented in the second region may be substantially the same.

The method of driving a three dimensional image display device may further include applying a black data voltage to the first region and applying the white data voltage to the second region, in the previous frame.

According to exemplary embodiments of the present invention, it is possible to reduce crosstalk in a three dimensional image display device and provide greater display quality of a three dimensional image.

## BRIEF DESCRIPTION OF THE DRAWINGS

The above and other features and aspects of the exemplary embodiments of the present invention will be described in detail with reference to the accompanying drawings, in which:

FIG. 1 is a diagram schematically representing the operation of a three dimensional image display device according to an exemplary embodiment of the present invention;

FIG. 2 is a diagram schematically representing a three dimensional image display device according to an exemplary embodiment of the present invention;

FIG. 3 is a graph representing signal waveforms of a three dimensional image display device according to an exemplary embodiment of the present invention;

FIG. 4 is a graph representing signal waveforms and luminance of a three dimensional image display device according to an exemplary embodiment of the present invention;

FIG. 5 is a circuit diagram schematically representing a gray voltage generator of a three dimensional image display device according to an exemplary embodiment of the present invention;

FIGS. 6 and 7 are diagrams representing images to be displayed in an exemplary embodiment of the present invention;

FIGS. 8 and 9 are diagrams representing images that are actually displayed in the exemplary embodiment described above with respect to FIG. 6 and FIG. 7;

FIG. 10 is a graph representing luminance level that changes in the region A in FIGS. 8 and 9;

FIG. 11 is a graph representing luminance level that changes in the region B of FIG. 9;

FIG. 12 is a graph representing luminance level displayed in the region B in accordance with an exemplary embodiment of the present invention;

FIGS. 13 and 14 are graphs representing display luminance levels according to differences in luminance level between the image transmitted to the left eye and the image transmitted to the right eye in an exemplary embodiment of the present invention;

FIG. 15 is a schematic diagram representing an input data conversion unit according to an exemplary embodiment of the present invention; and

FIG. 16 is a flowchart illustrating a method of determining an insertion data according to an exemplary embodiment of the present invention;

## DETAILED DESCRIPTION OF EXEMPLARY EMBODIMENTS

Exemplary embodiments of the present invention will be described more fully hereinafter with reference to the accompanying drawings. As those skilled in the art would realize, the described embodiments may be modified in various different ways. The drawings and description are to be regarded as illustrative in nature and not restrictive. Like reference numerals may designate like elements throughout the specification.

In the drawings, the thickness of layers, films, panels, regions, etc., may be exaggerated for clarity. Like reference numerals may designate like elements throughout the specification. It will be understood that when an element such as a layer, film, region, or substrate is referred to as being "on" another element, it can be directly on the other element or intervening elements may also be present.

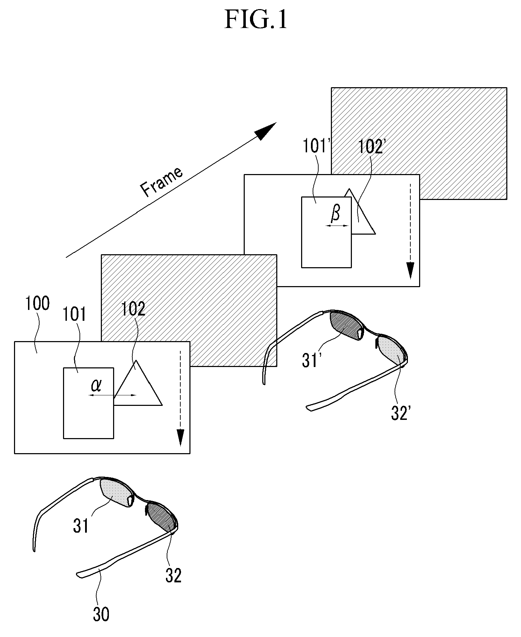

Hereinafter, a three dimensional image display device according to an exemplary embodiment of the present invention will be described in detail with reference to FIGS. 1 to 5.

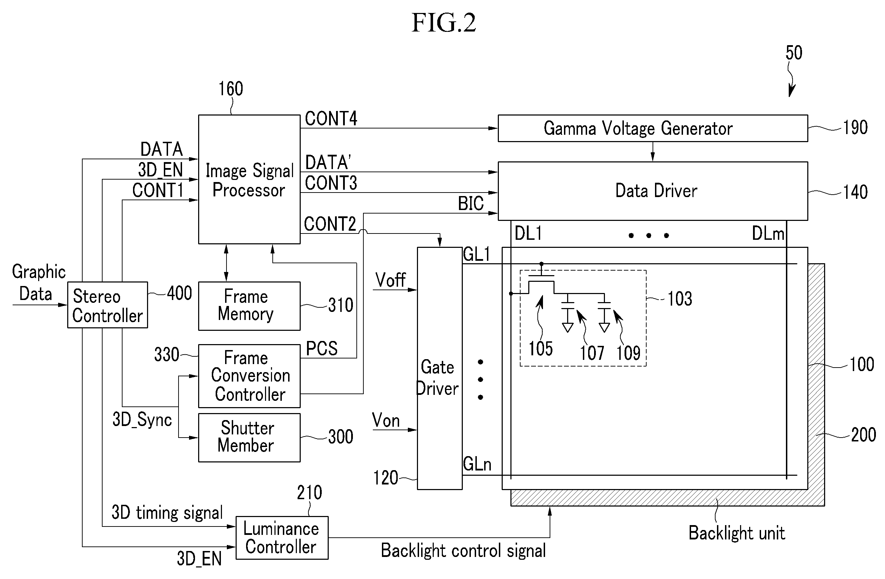

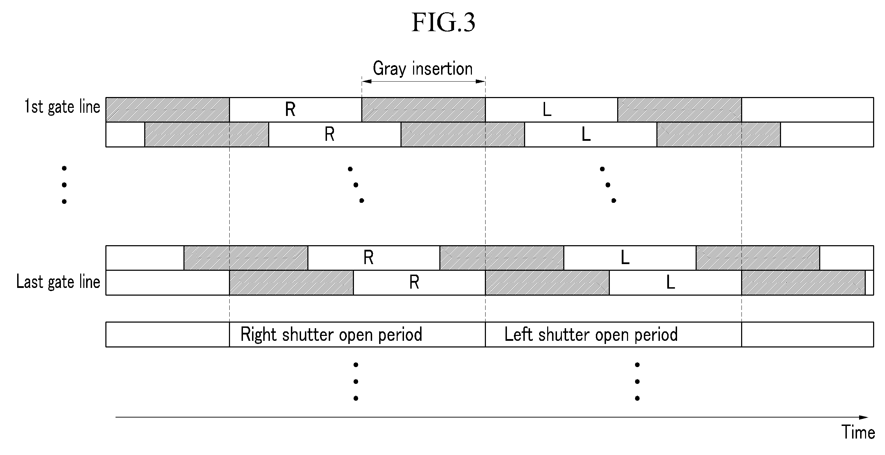

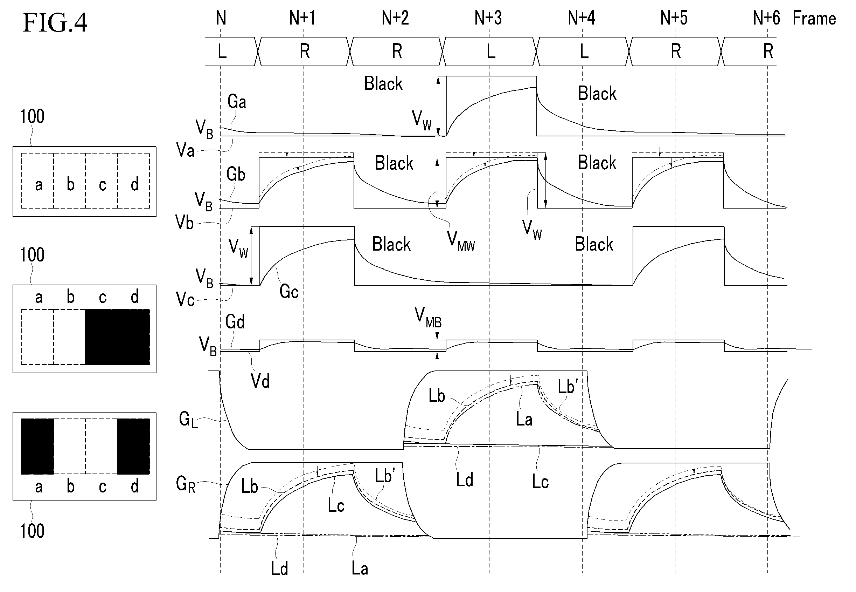

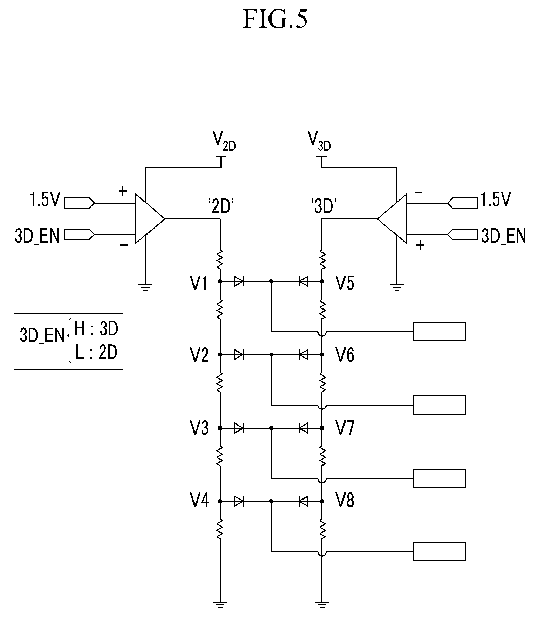

FIG. 1 is a diagram schematically representing the operation of a three dimensional image display device according to an exemplary embodiment of the present invention. FIG. 2 is a diagram schematically representing a three dimensional image display device according to an exemplary embodiment of the present invention. FIG. 3 is a graph representing signal waveforms of a three dimensional image display device according to an exemplary embodiment of the present invention. FIG. 4 is a graph representing signal waveforms and luminance of a three dimensional image display device according to an exemplary embodiment of the present invention. FIG. 5 is a circuit diagram schematically representing a gray voltage generator of a three dimensional image display device according to an exemplary embodiment of the present invention.

The display device 100 may include a liquid crystal display, an organic light emitting diode display, a plasma display panel, or an electrophoretic display. Hereinafter, it is assumed that the display device 100 is the liquid crystal display.

The display device 100 may include an upper substrate, a lower substrate, and a liquid crystal layer injected between the upper substrate and the lower substrate. The display device 100 displays an image by changing the alignment direction of the liquid crystals, using an electric field generated between two electrodes, thereby adjusting the transmission amount of light.

Gate lines GL1-GLn, data lines DL1-DLm, pixel electrodes, and thin film transistors 105 connected to them are disposed on the lower substrate. The thin film transistors 105 control a voltage that is applied to the pixel electrodes, in response to signals supplied to the gate lines GL1-GLn and the data lines DL1-DLm. The pixel electrodes may be transflective pixel electrodes having a transmissive region and a reflective region. Further, storage capacitors 107 may be additionally formed to maintain the voltage applied to the pixel electrodes for a predetermined time. For example, one pixel 103 may include the thin film transistor 105, the storage capacitor 107, and a liquid crystal capacitor 109.

Black matrixes, color filters, and common electrodes may be disposed on the upper substrate opposite to the lower substrate. Further, at least one of the color filters, black matrixes, and common electrodes on the upper substrate may be formed on the lower substrate, and when all of the common electrodes and the pixel electrodes are formed on the lower substrate, at least one of both electrodes may be formed as a linear electrode type.

The liquid crystal layer may include a liquid crystal of a twisted nematic (TN) mode, a liquid crystal of a vertically aligned (VA) mode, and a liquid crystal of an electrically controlled birefringence (ECB) mode.

A polarizer is attached to the outer sides of the upper substrate and the lower substrate, respectively. Further, a compensation film may be further provided between the substrates and the polarizer.

The backlight unit 200 includes a light source and the light source may be, for example, a fluorescent lamp, such as a cold cathode fluorescent lamp (CCFL), or an LED. Further, the backlight unit may further include a reflector, a light guide plate, a brightness enhancing film etc.

Referring to FIG. 2, a display apparatus 50 may include a display device 100, a backlight unit 200, a data driver 140, a gate driver 120, an image signal processor 160, a gamma voltage generator 190, a luminance controller 210, a shutter member 300, a frame memory 310, a frame conversion controller 330, and a stereo controller 400, etc. The stereo controller 400 may transmit a 3D timing signal and a 3D enable signal 3D_En to the luminance controller 210. The luminance controller 210 may transmit a backlight control signal to the backlight unit 200. The backlight unit 200 may be turned on/off in response to the backlight control signal from the luminance controller 210 and the stereo controller 400. The backlight control signal transmitted to the backlight unit 200 may keep the backlight unit 200 turned on for a predetermined time. For example, the backlight control signal that is transmitted to the backlight unit 200 may keep the backlight unit 200 turned on for a vertical blank (VB) or for the other time, except for the vertical blank.

The stereo controller 400 may transmit a 3D sync signal 3D_sync to the shutter member 300 and the frame conversion controller 330. The shutter member 300 may be electrically connected with the stereo controller 400. The shutter member 300 may receive the 3D sync signal 3D_sync by means of wireless communication, for example, infrared, or radio-based wireless communication. The shutter member 300 may operate in response to the 3D sync signal 3D_sync or a transformed 3D sync signal. The 3D sync signal 3D_sync may include signals that may open/close the left eye shutter or the right eye shutter. The frame conversion controller 330 may transmit control signals PCS and BIC to the image signal processor 160 and the data driver, respectively.

The stereo controller 400 may transmit display data DATA, a 3D enable signal 3D_En, and other control signals CONT1 to the image signal processor 160. The image signal processor 160 may transmit a variety of display data DATA' and various control signals CONT2, CONT3, and CONT4 to the display device 100 through the gate driver 120, the data driver 140, and the gamma voltage generator 190 and may display an image on the display device 100. The display data DATA may include left eye image data and right eye image data, in the three dimensional image display device.

Referring to FIG. 1, the shutter member 300 may be glasses-shaped shutter glasses 30, but is not limited thereto and may include mechanical shutter glasses (goggles) and optical shutter glasses. The shutter glasses 30 have right eye shutters 32 and 32' and left eye shutters 31 and 31' which alternately block light at a predetermined cycle by the operation of the display device 100. The right eye shutter may be closed 32 or open 32' and the left eye shutter may be open 31 or closed 31'. For example, the left eye shutter may be closed, with the right eye shutter open, whereas the right eye shutter may be closed, with the left eye shutter open. Further, both of the left eye shutter and the right eye shutter may be open or closed at the same time.

The shutters of the shutter glasses 30 may be formed by the technologies used for liquid crystal display, organic light emitting diode display, and electrophoretic display, but are not limited thereto. For example, the shutter may include two transparent conductive layers and a liquid crystal layer interposed therebetween. A polarization film may be disposed on a surface of the conductive layer. The liquid crystal substances are rotated by voltage applied to the shutter, and the shutter may be open or closed by the rotation.

For example, the left images 101 and 102 are output on the display device 100, the left eye shutter 31 of the shutter glasses 30 is open OPEN to transmit light, and the right eye shutter 32 is closed CLOSE to block light. Further, the right eye images 101' and 102' are output on the display device 100, the right eye shutter 32' of the shutter glasses 30 is open OPEN to transmit light and the left eye shutter 31' is closed CLOSE to block light. Therefore, the left eye image is recognized by only the left eye for a predetermined time and then the right eye image is recognized by only the right eye for the next predetermined time, such that a three dimensional image having depth effect is recognized by a difference between the left eye image and the right eye image.

The image recognized by the left eye is an image in which the quadrangle 101 and the triangle 102 are separated by a distance $\alpha$ from each other. Meanwhile, the image recognized by the right eye is an image in which the quadrangle 101' and the triangle 102' are separated by a distance $\beta$ from each other. The distances $\alpha$ and $\beta$ may be different values. When the distances between the images recognized by both eyes are different from each other, as described above, the quadrangles and the triangles have different distance perception due to the difference, such that the triangles are considered to be positioned behind the quadrangles and depth perception is implemented. It is possible to adjust the distance (depth perception) between two objects spaced apart from each other, by adjusting the distances $\alpha$ and $\beta$ between the quadrangles and the triangles spaced apart from each other.

An image having a predetermined gray value may be displayed between the left eye images 101 and 102 and the right eye images 101' and 102'. For example, a black image, a white image, and a gray image etc. may be displayed. Crosstalk between the left eye images 101 and 102 and the right eye images 101' and 102' may decrease, when an image having a predetermined gray value is inserted in the entire screen of the display device.

Referring to FIG. 1, the direction of arrows in the display device 100 represents the order that gate-on voltage is applied to a plurality of a gate lines extending substantially in the row direction. For example, the gate-on signal may be sequentially applied from the upper gate line to the lower gate line in the display device 100.

For example, the display device 100 may display the left eye images 101 and 102, as follows. The gate-on voltage is sequentially applied to the gate lines such that a data voltage is applied to pixel electrode through thin film transistors connected to corresponding gate lines. The applied data voltage is a data voltage for displaying the left eye images 101 and 102 (hereinafter, referred to as "left eye data voltage") and the applied left eye data voltage may be maintained for a predetermined time by a storage capacitor. Similarly, a data voltage for displaying the right eye images 101' and 102' (hereinafter, referred to as "right eye data voltage") is applied and may be maintained for a predetermined time by a storage capacitor.

As an example of signal waveforms of the three dimensional image display device, referring to FIG. 3, gate-on signals are sequentially supplied to the first gate line to the last gate line. The right eye image R may be sequentially supplied to a plurality of pixels connected to corresponding gate lines or the left eye image L may be sequentially supplied to a plurality of pixels connected to corresponding gate lines. The right eye shutter may be open and the left eye may be closed while the right eye image R is sequentially supplied to the plurality of pixels connected to the corresponding gate lines. Further, the left eye shutter may be open and the right eye shutter may be closed while the left eye image L is supplied to the plurality of pixels connected to the corresponding gate lines.

An image having a predetermined gray value may be input between the input section of the right eye image R and the input section of the left eye image L, which may be called a gray insertion. For example, black and white images may be displayed on the entire screen, after the right eye image R is disposed on the display device, and then the left eye image L may be displayed. The predetermined gray value is not limited to the black or white and may have various values. Crosstalk between the right eye image and the left eye image may be reduced when the image having a predetermined gray value is inserted in the entire screen of the display device.

Referring to FIG. 4, two right eye images are input and then two left eye images are input. This pattern of two right eye images followed by two left eye images may be repeated. For example, a normal right eye image, a normal left eye image, and another normal right eye image are alternately input to an N+1 frame, an N+3 frame, and an N+5 frame, respectively. The normal right eye image or the normal left eye image represent content information, such as a video or a picture. Black images are input to an N+2 frame, an N+4 frame, and an N+6 frame, etc. The black images are input in a period between the normal right eye images and the normal left eye images, such that crosstalk between the normal right eye images and the normal left eye images may be reduced.

Referring to FIG. 4, four regions a, b, c, and d are defined in one screen of the display device 100. Changes in data voltage Va, Vb, Vc, and Vd that are applied to the regions, respectively, and changes in luminance Ga, Gb, Gc, and Gd that are represented in the regions, respectively, by the applied data voltage are displayed. Further, the luminance $G_L$ of the left eye shutter of the shutter member 300 and the luminance $G_R$ of the right eye shutter are displayed and luminance La, Lb, Lc, and Ld of the display device 100, which is seen through the shutter member 300, is displayed. The time gap of one frame may be 4ms.

For example, in the region a, a data voltage $V_B$ (hereinafter, referred to as "black data voltage") for displaying a black image is applied at the N+1 frame and the N+2 frame, a data voltage Vw (hereinafter, referred to as "white data voltage") for displaying a white image is applied at the N+3 frame, and the black data voltage $V_B$ is sequentially applied again at the N+4 frame and the N+5 frame. The luminance Ga of the region may gradually increase or gradually decrease according to the response speed of the liquid crystal substance in the display device 100, when the data voltage Va for the region a has been applied to the display device 100. Therefore, the luminance Ga is larger than 0 in the corresponding frames, even though the black data voltage $V_B$ has been applied to the region a, at the N+1 frame, the N+4 frame, and the N+5 frame. For example, a true black is not displayed in the display device 100, at the corresponding frame such as the N+1 frame, the N+4 frame, and the N+5 frame. Further, a true white is not displayed in the display device 100, at the N+3 frame, even though the white data voltage Vw has been applied to the region a at the N+3 frame. The larger the gray difference between the images displayed at the sequential frames, the more the difference between target luminance and actual luminance may increase. The true black may be substantially displayed in the display device, at the N+2 frame. The same black data voltage $V_B$ as in the N+2 frame has been applied at the N+1 frame.

In the region b, a corrected white data voltage Vmw smaller than the white data voltage Vw is applied at the N+1 frame, the black data voltage $V_B$ is applied at the N+2 frame, the corrected white data voltage Vmw is applied at the N+3 frame, the black data voltage $V_B$ is applied at the N+4 frame, and the corrected white data voltage Vmw is applied at the N+5 frame. The luminance Gb of the region b may gradually increase or gradually decrease according to the response speed of the liquid crystal substance in the display device 100, when the data voltage Vb of the region b has been applied to the display device 100. In the region b, the black data voltage $V_B$ and the corrected white data voltage Vmw are alternately and repeatedly input. The difference between the two voltages may be relatively large, such that the true black may not be displayed and the true white may not be displayed in the display device 100. However, since the corrected white data voltage Vmw smaller than the white data voltage Vw is applied at the N+3 frame, the image displayed in the region b of the N+3 frame and the image displayed in the region a of the N+3 frame may have luminance that is similar such that the viewer does not recognize the effect of the corrected white data. For example, the left eye shutter is open at the N+3 frame, while the luminance La of the region a in the left eye image seen through the left eye shutter and the luminance Lb of the region b in the left eye image seen through the left eye shutter may be similar to each other. As a result, crosstalk between the region a and the region b may be reduced at the N+3 frame.

The crosstalk may be generalized by the following Formula 1.

[Formula 1]

$$CT_{black} \, (\%) = \frac{Lum \, (P_W \leftarrow Q_W) - Lum \, (P_W \leftarrow Q_B)}{Lum \, (P_W \leftarrow Q_W) - Lum \, (P_B \leftarrow Q_B)} \times 100$$

P and Q are the current frame normal image and the previous frame normal image, respectively, and a black image may be displayed between the current frame normal image and the previous frame normal image. For example, P may be the left eye normal image of the N+3 frame and Q may be the right eye normal image of the N+1 frame. Alternatively, P may be the right eye normal image of the N+5 frame and Q may be the left eye normal image of the N+3 frame. Lum (Pw←Qw) is the luminance of the current frame normal image that is seen through the shutter, when the previous frame normal image and the current frame normal image both have a white gray. Lum ($P_B \leftarrow Q_B$) is the luminance of the current frame normal image that is seen through the shutter, when the previous frame normal image and the current frame normal image both have a black gray. Lum (Pw←$Q_B$) is the luminance of the current frame normal image that is seen through the shutter, when the previous frame normal image has a block gray and the current frame normal image has a white gray. According to Formula 1, crosstalk may be reduced by reducing or making the same the difference between Lum (Pw←Qw) and Lum (Pw←$Q_B$). For example, it may decrease only Lum (Pw←Qw), or may increase only Lum (Pw←$Q_B$). It may also decrease Lum (Pw←Qw) while increasing Lum (Pw←$Q_B$). Lum may be the luminance of the panel in itself in Formula 1.

When the white data voltage Vw is applied to both the region a and the region b at the N+3 frame, the region b has larger luminance than the region a. A difference in luminance is generated between the region a and the region b at the N+3 frame, as represented in FIG. 4, and crosstalk may be increased. The black data voltage $V_B$ is sequentially applied at the N+1 frame and the N+2 frame and the image at the N+2 frame is displayed by the true black in the region a, whereas the image at the N+2 is not displayed by the true black in the region b, such that the response of the liquid crystals of the region a and the region b is different at the end of the N+2 frame. As a result, the region a has smaller luminance than the region b, when the same white data voltage Vw is applied to the region a and the region b.

Further, the gray displayed in the region a at the N+3 frame may be higher than the gray displayed in the region a at the frame N+3, which is represented in FIG. 4, when a voltage slightly larger than the black data voltage $V_B$ is applied to the region a at the N+2 frame. Accordingly, the gray value displayed in the region 'b' at the N+3 frame may be a value that is similar to the gray value displayed in the region a at the N+3 frame such that a viewer may not recognize, when the white data voltage Vw is applied to the region b at the N+3 frame. The left eye shutter is open at the N+3 frame while the luminance La of the region a and the luminance Lb of the region b may have similar luminance in the left eye image seen through the left eye shutter. Alternatively, it is possible to make the data voltage that is applied to the region a at the N+2 frame slightly larger than the black data voltage $V_B$ and make the data voltage that is applied to the region b slightly smaller than the white data voltage Vw at the N+3 frame. The magnitude of the data voltage may depend on whether the region a may be recognized as black through the shutter member at the N+2 frame or whether the region b may be recognized as white through the shutter member at the N+3 frame.

A Look-up table (LUT) may illustrate a manner in which gray values may be corrected. For example, the look-up table may be represented as the following Table 1. Table 1 represents digital types of gray data of 10 bits. In Table 1, the horizontal axis represents the grays of the previous frame normal images input from an external graphic input unit, the vertical axis represents the grays of the current frame normal images input from the external graphic input unit, and the table values are the grays of corrected current frame normal images.

(Table 1)

|  | 0 | 64 | 128 | 192 | 256 | 320 | 384 | 448 | 512 | 576 | 640 | 704 | 768 | 832 | 896 | 960 | 1024 |
|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 | 0 |
| 64 | 84 | 64 | 28 | 0 | 0 | 0 | 0 | 0 | 0 | 0 | 0 | 0 | 0 | 0 | 0 | 0 | 0 |
| 128 | 268 | 256 | 128 | 88 | 68 | 52 | 40 | 32 | 0 | 0 | 0 | 0 | 0 | 0 | 0 | 0 | 0 |
| 192 | 412 | 408 | 272 | 192 | 152 | 120 | 104 | 92 | 76 | 64 | 52 | 44 | 28 | 20 | 0 | 0 | 0 |
| 256 | 492 | 492 | 392 | 300 | 256 | 220 | 184 | 160 | 136 | 116 | 108 | 100 | 84 | 76 | 64 | 64 | 64 |
| 320 | 576 | 576 | 500 | 404 | 360 | 320 | 296 | 260 | 224 | 200 | 180 | 152 | 132 | 116 | 104 | 100 | 100 |
| 384 | 652 | 652 | 596 | 496 | 460 | 408 | 384 | 356 | 316 | 284 | 240 | 248 | 224 | 196 | 164 | 148 | 148 |
| 448 | 708 | 708 | 696 | 608 | 556 | 504 | 472 | 448 | 424 | 400 | 372 | 340 | 320 | 292 | 264 | 232 | 228 |
| 512 | 776 | 776 | 776 | 704 | 652 | 608 | 580 | 544 | 512 | 492 | 472 | 448 | 420 | 396 | 368 | 344 | 340 |
| 576 | 828 | 828 | 824 | 772 | 732 | 688 | 664 | 624 | 600 | 576 | 560 | 536 | 504 | 476 | 752 | 432 | 424 |
| 640 | 868 | 868 | 864 | 828 | 788 | 756 | 732 | 704 | 684 | 656 | 640 | 620 | 600 | 564 | 536 | 512 | 496 |
| 704 | 920 | 920 | 920 | 884 | 844 | 828 | 800 | 784 | 760 | 740 | 728 | 704 | 688 | 664 | 640 | 616 | 600 |
| 768 | 968 | 968 | 968 | 964 | 908 | 880 | 856 | 848 | 828 | 812 | 800 | 780 | 768 | 756 | 736 | 712 | 696 |
| 832 | 1000 | 1000 | 1000 | 1000 | 972 | 956 | 932 | 912 | 896 | 888 | 872 | 864 | 844 | 832 | 820 | 800 | 788 |
| 896 | 1000 | 1000 | 1000 | 1000 | 1008 | 1000 | 996 | 984 | 968 | 960 | 956 | 936 | 928 | 912 | 896 | 884 | 872 |
| 960 | 1000 | 1000 | 1000 | 1000 | 1000 | 1000 | 1000 | 1016 | 1008 | 1008 | 1000 | 992 | 988 | 984 | 976 | 960 | 944 |
| 102 4 | 1000 | 1000 | 1000 | 1000 | 1000 | 1000 | 1000 | 1000 | 1000 | 1000 | 1000 | 1000 | 1000 | 1000 | 1000 | 1000 | 1023 |

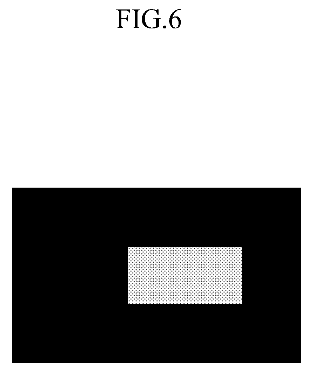

The Table 1 represents an example by which the white gray data is decreased to 1000 from 1024 and the other gray data is corrected on the basis of those represented in FIGS. 6 to 16, which are described below. Further, the white gray data may have a value larger or smaller than 1000 within a range where the visibility of white through the shutter does not reduce. Image quality may be increased by correcting the luminance values of each gray data such that the gamma value becomes 2.2, for the corrected white gray data. For example, gamma correction may be based on the following Table 2.

(Table 2)

| Gray | 0 | 1 | 2 | 3 | 4 | 5 | ... | 253 | 254 | 255 | 256 |
|------|---|---|---|---|---|---|-----|-----|-----|-----|------|
| LUT | 0 | 3 | 6 | 8 | 13 | 16 | ... | 971 | 981 | 991 | 1000 |

In a region c, the white data voltage Vw is applied at the N+1 frame, the black data voltage $V_B$ is sequentially applied at the N+2 frame, the N+3 frame, and the N+4 frame, and the white data voltage Vw is sequentially applied again at the N+5 frame. The luminance Gc of the region c may gradually increase or gradually decrease according to the response speed of the liquid crystal substance in the display device 100, when the data voltage Vc of the region c has been applied to the display device 100. Therefore, the luminance at the corresponding frame may have a value larger than 0, even though the black data voltage $V_B$ has been applied to the region c at the N+2 frame and the N+3 frame. For example, the true black may not be displayed at the corresponding frame in the display device 100. Further, the true white may not be displayed at the N+1 frame and the N+5 frame in the display device 100, even though the white data voltage Vw has been applied to the region c at the N+1 frame and the N+5 frame. The true black may be substantially displayed at the N+4 frame in the display device when the same black data voltage $V_B$ has been applied at the N+3 frame and at the N+4 frame.

In a region d, a corrected black data voltage $V_{MB}$ larger than the black data voltage $V_B$ is applied at the N+1 frame, the black data voltage $V_B$ is applied to the N+2 frame, the corrected black data voltage $V_{MB}$ is applied at the N+3 frame, the black data voltage $V_B$ is applied to the N+4 frame, and the corrected black data voltage $V_{MB}$ is applied at the N+5 frame. The luminance Gd of the region d may gradually increase or according to the response speed of the liquid crystal substance in the display device 100, when the data voltage Vd of the region d has been applied to the display device 100. The black data voltage $V_B$ and the corrected black data voltage $V_{MB}$ are alternately and repeatedly input in the region d. Accordingly, since the corrected black data voltage $V_{MB}$ larger than the black data voltage $V_B$ is applied at the N+3 frame, the image displayed in the region d of the frame N+3 and the image displayed in the region c of the frame N+3 may have luminance that is similar such that a viewer would not perceive a difference. For example, the left eye shutter is open at the N+3 frame while the luminance Lc of the region c in the left eye image seen through the left eye shutter and the luminance Ld of the region d in the left eye image seen through the left eye shutter may be similar to each other. As a result, crosstalk between the region c and the region d may be reduced at the N+3 frame.

The crosstalk may be generalized by the following Formula 2.

[Formula 2]

$$CT_{white}\,(\%) = \frac{Lum\,(P_B \leftarrow Q_W) - Lum\,(P_B \leftarrow Q_B)}{Lum\,(P_W \leftarrow Q_W) - Lum\,(P_B \leftarrow Q_B)} \times 100$$

P and Q are the current frame normal image and the previous frame normal image, respectively, and a black image may be displayed between the current frame normal image and the previous frame normal image. For example, P may be the left eye image of the N+3 frame and Q may be the right eye image of the N+1 frame. Alternatively, P may be the right eye image of the N+5 frame and Q may be the left eye image of the N+3 frame. Lum (Pw←Qw) is the luminance of the current frame normal image that is seen through the shutter, when the previous frame normal image and the current frame normal image both have a white gray. Lum $(P_B \leftarrow Q_B)$ is the luminance of the current frame normal image that is seen through the shutter, when the previous frame normal image and the current frame normal image both have a black gray. Lum $(P_B \leftarrow Qw)$ is the luminance of the current frame normal image that is seen through the shutter, when the previous frame normal image has a white gray and the current frame normal image has a black gray. According to the Formula 2, it is possible to reduce crosstalk by reducing or making the same Lum$(P_B \leftarrow Q_B)$ and Lum$(P_B \leftarrow Qw)$. For example, it is possible to decrease only the Lum $(P_B \leftarrow Qw)$, increase only the Lum $(P_B \leftarrow Q_B)$, or decrease the Lum

($P_B$←Qw) while increasing the Lum ($P_B$←$Q_B$). The Lum may be the luminance of the panel in the Formula 2.

When the black data voltage $V_B$ is applied to both the region c and the region d at the N+3 frame, the region d has smaller luminance than the region c. For example, a difference in luminance is generated between the region c and the region d at the N+3 frame, such that crosstalk may be increased. As a result, the region c has larger luminance than the region d, when the same black data voltage $V_B$ is applied to the region c and the region d.

Further, the gray displayed in the region c at the N+3 frame may be lower than the gray displayed in the region c at the frame N+3, which is represented in FIG. 4, when voltage that is slightly smaller than the white data voltage Vw is applied to the region c at the N+1 frame. Accordingly, the gray displayed in the region d at the N+3 frame may be a value that is similar to the gray displayed in the region c at the N+3 frame such that a viewer may not recognize when the black data voltage $V_B$ is applied to the region d at the N+3 frame. For example, the left eye shutter is open at the N+3 frame while the luminance Lc of the region c and the luminance Ld of the region d may have similar luminance in the left eye image seen through the left eye shutter. Alternatively, it is possible to make the data voltage that is applied to the region c at the N+1 frame slightly smaller than the white data voltage Vw and make the data voltage that is applied to the region d at the N+3 frame slightly larger than the black data voltage $V_B$. The magnitude of the data voltage may be adjusted depending on whether the region c may be recognized as white through the shutter member at the N+1 frame or whether the region d may be recognized as black through the shutter member at the N+3 frame.

It is possible to refer to a Look-up table (LUT) for the gray corresponding to the data voltage in order to adjust the magnitude of the data voltage. For example, the look-up table may be represented as the following Table 3. Table 3 represents digital types of gray data of 10 bits. In Table 3, the horizontal axis represents the grays of the previous frame normal images input from an external graphic input unit, the vertical axis represents the grays of the current frame normal images input from the external graphic input unit, and the table values are the grays of corrected current frame normal images.

(Table 3)

| | 0 | 64 | 128 | 192 | 256 | 320 | 384 | 448 | 512 | 576 | 640 | 704 | 768 | 832 | 896 | 960 | 1024 |
|---|---|---|---|---|---|---|---|---|---|---|---|---|---|---|---|---|---|
| 0 | 10 | 84 | 268 | 412 | 492 | 576 | 652 | 708 | 776 | 828 | 868 | 920 | 968 | 1000 | 1000 | 1000 | 1000 |
| 64 | 10 | 64 | 256 | 408 | 492 | 576 | 652 | 708 | 776 | 828 | 868 | 920 | 968 | 1000 | 1000 | 1000 | 1000 |
| 128 | 10 | 28 | 128 | 272 | 392 | 500 | 596 | 696 | 776 | 824 | 864 | 920 | 968 | 1000 | 1000 | 1000 | 1000 |
| 192 | 10 | 10 | 88 | 192 | 300 | 404 | 496 | 608 | 704 | 772 | 828 | 884 | 964 | 1000 | 1000 | 1000 | 1000 |
| 256 | 10 | 10 | 68 | 152 | 256 | 360 | 460 | 556 | 652 | 732 | 788 | 844 | 908 | 972 | 1008 | 1000 | 1000 |
| 320 | 10 | 10 | 52 | 120 | 220 | 320 | 408 | 504 | 608 | 688 | 756 | 828 | 880 | 956 | 1000 | 1000 | 1000 |
| 384 | 10 | 10 | 40 | 104 | 184 | 296 | 384 | 472 | 580 | 664 | 732 | 800 | 856 | 932 | 996 | 1000 | 1000 |
| 448 | 10 | 10 | 32 | 92 | 160 | 260 | 356 | 448 | 544 | 624 | 704 | 784 | 848 | 912 | 984 | 1016 | 1000 |
| 512 | 10 | 10 | 10 | 76 | 136 | 224 | 316 | 424 | 512 | 600 | 684 | 760 | 828 | 896 | 968 | 1008 | 1000 |
| 576 | 10 | 10 | 10 | 64 | 116 | 200 | 284 | 400 | 492 | 576 | 656 | 740 | 812 | 888 | 960 | 1008 | 1000 |
| 640 | 10 | 10 | 10 | 52 | 108 | 180 | 240 | 372 | 472 | 560 | 640 | 728 | 800 | 872 | 956 | 1000 | 1000 |
| 704 | 10 | 10 | 10 | 44 | 100 | 152 | 248 | 340 | 448 | 536 | 620 | 704 | 780 | 864 | 936 | 992 | 1000 |
| 768 | 10 | 10 | 10 | 28 | 84 | 132 | 224 | 320 | 420 | 504 | 600 | 688 | 768 | 844 | 928 | 988 | 1000 |
| 832 | 10 | 10 | 10 | 20 | 76 | 116 | 196 | 292 | 396 | 476 | 564 | 664 | 756 | 832 | 912 | 984 | 1000 |
| 896 | 10 | 10 | 10 | 10 | 64 | 104 | 164 | 264 | 368 | 452 | 536 | 640 | 736 | 820 | 896 | 976 | 1000 |
| 960 | 10 | 10 | 10 | 10 | 64 | 100 | 148 | 232 | 344 | 432 | 512 | 616 | 712 | 800 | 884 | 960 | 1000 |
| 1024 | 10 | 10 | 10 | 10 | 64 | 100 | 148 | 228 | 340 | 424 | 496 | 600 | 696 | 788 | 872 | 944 | 1023 |

*The Table 3 represents an example when the black gray data is increased to 10 from 0,* the white gray data is decreased to 1000 from 1024, and another gray data is corrected on the basis of those represented in FIGS. 6 to 16, which are described below. Further, the black gray data may have a value a little bit larger or a little bit smaller than 10 within a range where the visibility of black through the shutter does not reduce. The white gray data may have a value a little bit larger or a little bit smaller than 1000 within a range where the visibility of white through the shutter does not reduce. It is possible to further increase the image quality by correcting the luminance values of each gray data such that the gamma value becomes 2.2, for the corrected black gray data and the corrected white gray data.

Referring to FIG. 5, at least one voltage of $V_{2D}$ and $V_{3D}$ may be increased to compensate reduction of luminance that may be caused when the Lum (Pw←Qw), Lum ($P_B$←$Q_B$), Lum (Pw←$Q_B$), and Lum ($P_B$←Qw) are adjusted. For example, when the magnitudes of voltages $V_{2D}$ and $V_{3D}$ are 15 V, at least one of them may be changed to 18 V. Further, $V_{3D}$ may be changed to 18 V from 15 V, when the previous frame normal image has a black gray and the current frame normal image has a white gray. Further, $V_{3D}$ may be maintained at 15 V, when the previous frame normal image and the current frame normal image both have the white gray.

In FIG.5, the 3D enable signal is at a high level when a 3D image is input, and the 3D enable signal is at a low level when a 2D image is input. Further, V1 to V8 may be 15 V, 8 V, 7 V, 0 V, 17.8 V, 9.2 V, 8.8 V, 0.2 V, respectively.

Modifying the data voltage that is applied to the liquid crystal panel, using those represented in FIGS. 6 to 11 is described hereinafter.

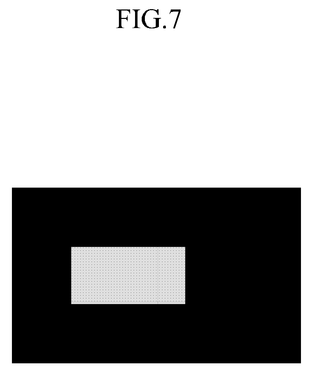

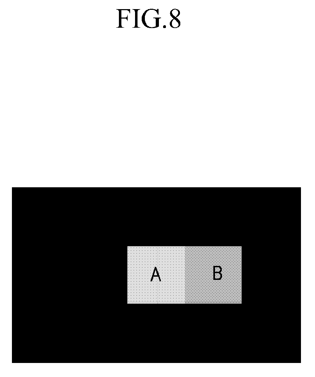

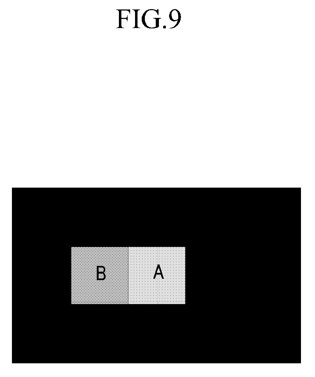

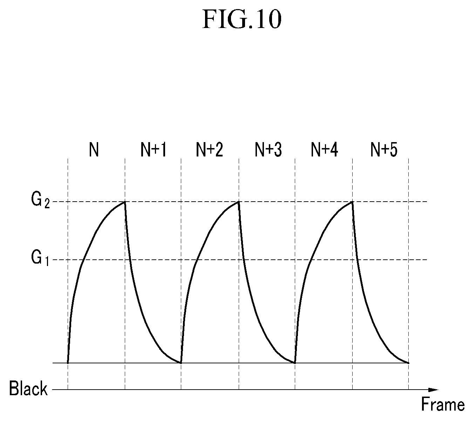

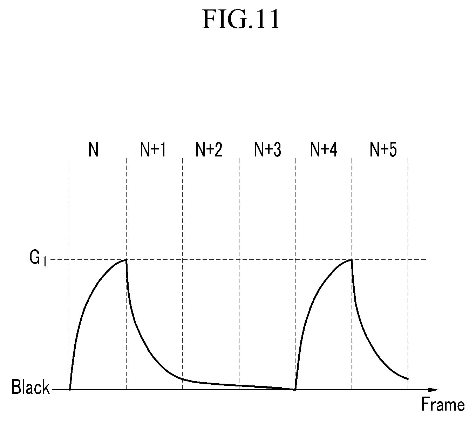

FIGS. 6 and 7 are diagrams representing images to be displayed according to an exemplary embodiment of the present invention. FIGS. 8 and 9 are diagrams representing images that are actually displayed in performing the disclosure provided with reference to FIGS. 6 and 7. FIG. 10 is a graph representing luminance level that changes in the region A in FIGS. 8 and 9. FIG. 11 is a graph representing luminance level that changes in the region B of FIG. 9.

FIG. 6 represents a liquid crystal panel displaying an image that is transmitted to the left eye at the N frame and FIG. 7 represents a liquid crystal panel displaying an image transmitted to the right eye at the N+3 frame.

FIGS. 6 and 7 have an overlapping region (e.g. the regions indicated by A in FIGS. 8 and 9) and a non-overlapping region (e.g. the regions indicated by B in FIGS. 8 and 9). Meanwhile, the regions around the quadrangles are represented by black in FIGS. 6 and 7.

When a voltage is applied to the liquid crystal panel to display the images represented in FIGS. 6 and 7, the images represented in FIGS. 8 and 9 may actually be displayed. For example, the region A where the image transmitted to the left eye and the image transmitted to the right eye overlap each other is displayed with target luminance G2. However, the region B where the images do not overlap may be displayed with luminance G1 lower than the target luminance.

FIGS. 10 and 11 represent changes in luminance level for frame, in which G2 is a target luminance level and G1 represents a luminance level lower than G2.

Change in luminance level at the region A is described first with reference to FIG. 10.

In the region A, an image data voltage for displaying an image is applied at the N frame, a black data voltage is applied at the N+1 frame, the same image data voltage is applied again at the N+2 frame, and the black data voltage is applied at the N+3 frame.

As such, change in luminance level at the region A are represented in FIG. 10. Since the same image data voltage is applied before and after the period where the black data voltage is applied, the time when the displayed luminance drops to the black luminance is short, such that luminance higher than black is displayed at the N+1 frame and the N+3 frame, while the target luminance may be sufficiently displayed. The target luminance is seen from the image transmitted to the left eye and the image transmitted to the right eye.

Meanwhile, although the insertion data voltage is the black data voltage, the displayed image represents luminance higher than black, which has the same result as when the insertion data voltage is the data voltage representing luminance higher than the black data voltage.

Meanwhile, the luminance level of the region B represented in FIG. 9, in the region B, changes as represented in FIG. 11. For example, an image data voltage representing target luminance at one of total four frames is applied and the black data voltage is applied at the rest frames, the time that the luminance drops to the black is long, such that a black image may be represented at sufficiently low luminance. However, a sufficiently high G2 luminance level is not displayed at the frame where data voltage is applied and a G1 luminance level lower than G2 is displayed. As a result, luminance lower than the target luminance is displayed. This is the same as the region B of FIG. 8.

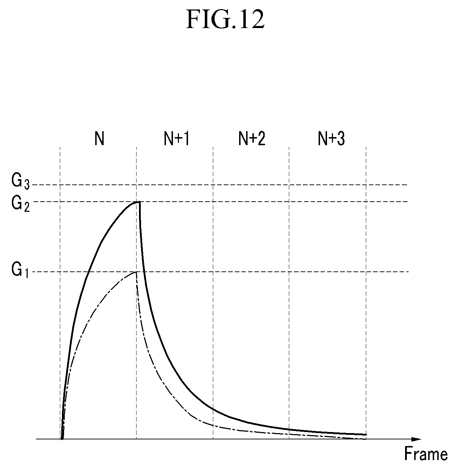

The voltage that is applied to the region B may be corrected in order to remove the problem at the region B where the image transmitted to the left eye and the image transmitted to the right eye do not overlap. This is represented in FIG. 12.

FIG. 12 is a graph representing luminance level displayed in the region B in accordance with an exemplary embodiment of the present invention. G3 represents a luminance level that is displayed at the modified data voltage in FIG. 12.

It was described with reference to FIG. 11 that the G1 luminance level is displayed due to the low response speed, although the G2 luminance level is supposed to be displayed in the region B. In this case (the same as the dotted-line graph in FIG. 12), the G2 luminance level may be displayed by generally applying data voltage (data voltage that may display the G3 luminance level in FIG. 12) which is higher than the data voltage applied to the region A such that the luminance level rapidly change for one frame. (See the solid line graph in FIG. 12)

It is possible to display the target luminance also in the region B by making the data voltage applied to the region B higher than the data voltage applied to the region A such that the liquid crystal layer changes more quickly the alignment direction, as described above. For example, although different data voltage is applied to the region A where the images overlap and the region B where the images do not overlap, the same luminance is displayed.

Although it was described above that higher data voltage is applied to the region B than the region A, lower data voltage may be applied. For example, modifying the data voltage is not made to increase the data voltage, but the data voltage changes such that the alignment direction of the liquid crystal layer can be more quickly changed.

The above disclosure relates to an example wherein the image data voltage that is applied to the left and the image data voltage that is applied to the right are the same.

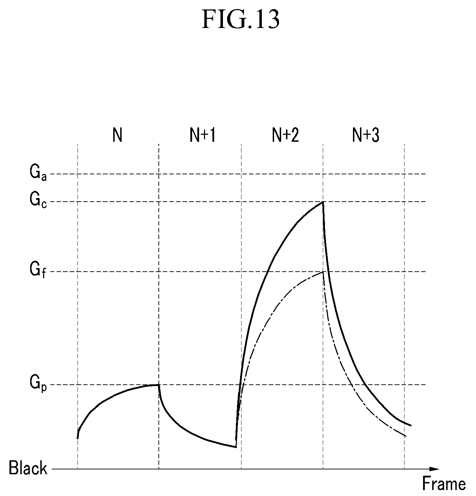

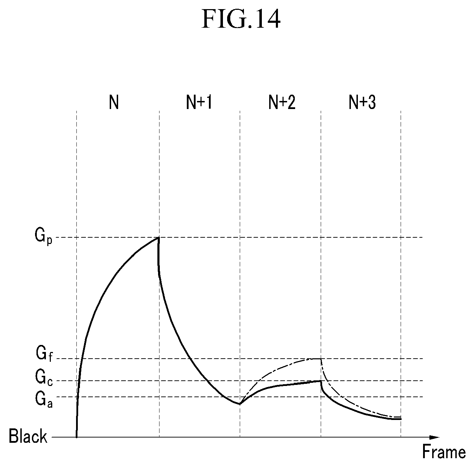

Hereinafter, modifying data voltage that is applied when different voltages are applied will be described, which is represented in FIG. 13 and FIG. 14.

FIGS. 13 and 14 are graphs representing display luminance levels according to differences in luminance level between the image transmitted to the left eye and the image transmitted to the right eye in an exemplary embodiment of the present invention.

FIG. 13 is described first. FIG. 13 represents when the image transmitted to the left eye represents a Gp luminance level and the image transmitted to the right eye represents a Gc luminance level.

When data voltage is applied such that the Gc luminance level is represented for one frame, only a Gf luminance level is represented, as indicated by the dotted line in FIG. 13, but the Gc luminance level is not represented. Therefore, data voltage for displaying a luminance level higher than the Gc luminance level is applied in order to represent the Gc luminance level for one frame.

FIG. 14 represents when the image transmitted to the left eye represents the Gp luminance level and the image transmitted to the right eye represents the Gc luminance level.

In general, when a data voltage is applied to represent the Gc luminance level, the Gf luminance level is represented, as indicated by the dotted line in FIG. 14, but it fails to drop to the Gc luminance level. Since the insertion data (black data or data representing luminance higher than the black data) which is applied at the N+1 frame fails to drop to a sufficiently low luminance level, a relatively high luminance level is represented at the N+2 frame. Therefore, data voltage for displaying a luminance level lower than the Gc luminance level is applied in order to drop to the Gc luminance level for one frame.

Although FIGS. 13 and 14 represent when data voltage higher than black data is applied, the present invention is not necessarily limited thereto and the data voltage is modified such that target luminance may be represented when the data voltage is applied.

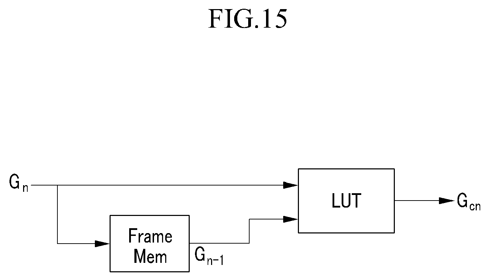

Modifying data voltage as represented in FIGS. 13 and 14 may be achieved by the structure represented in FIG. 15.

FIG. 15 is a schematic diagram representing an input data conversion unit according to an exemplary embodiment of the present invention.

In FIG. 15, one of Gn and Gn-1 represents right image data and the other represent left image data, in which when Gn is the left image data, Gn-1 is the right image data, whereas when the Gn is the right image data, Gn-1 is the left image data.

In FIG. 15, LUT designates a look-up table, where modifying gray data Gcn for Gn and Gn-1 is stored. The modifying gray data Gcn is data that makes the same the luminance levels at the overlapping region and the non-overlapping region in FIG. 6 to 9, and may have a data value that is larger or smaller than the original data, as represented in FIG. 12 to 14.

The image data Gn-1 that has been input first is stored in a frame memory Frame Mem, and when the next data Gn is input, the modifying gray data Gcn is found from the look-up table and then output, on the basis of Gn and Gn-1. The output modifying gray data Gcn is used as data for displaying image, instead of Gn data.

Although the black data was not mentioned in the above, the black data is inserted between the modifying gray data Gcn and the modifying gray data at the next frame.

Meanwhile, the modifying gray data Gcn is converted into data voltage and applied to a data line.

Modifying data represented in FIG. 6 to 15 is made when the response speed of the liquid crystal layer cannot come up with the driving speed, such that this data processing may be unnecessary when the liquid crystal layer has sufficiently high response speed or data is sufficiently rapidly displayed.

It was described in the above that it is possible to insert data representing higher luminance than black, instead of the black data. However, the invention is not limited to this option. Black data may be used as well.

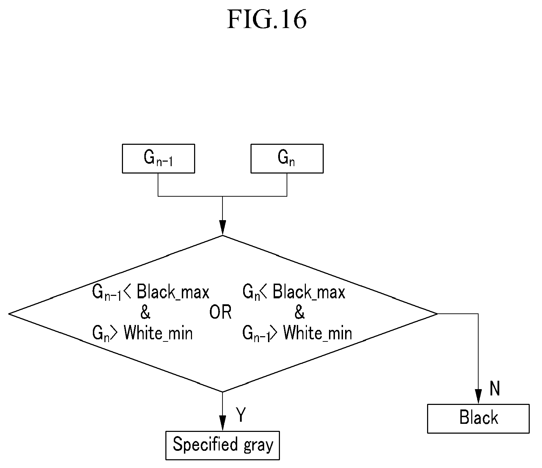

In general, although the black data may be inserted between the left image data and the right image data, black cannot be displayed when a difference between the left image data and the right image data is large, even if the black data is applied. Therefore, the insertion data representing higher luminance than black may be inserted, which is represented in the flowchart in FIG. 16.

FIG. 16 is a flowchart illustrating a method of determining an insertion data according to an exemplary embodiment of the present invention.

In FIG. 16, Gn-1 indicates one of the left image data and the right image data and Gn indicates the other one thereof. Black_max represents the predetermined maximum gray data value in data representing a low gray and White_min represents the predetermined minimum gray data value in data representing high gray.

When data is changed from the left image data to the right image data or vice versa, both data is not in between Black_max and White_min. When one of the data has a data value lower than Black_max and the other has a value larger than White_min, the luminance cannot be changed within one frame, such that predetermined insertion data (Specific gray data) which represents higher luminance than black data is applied, instead of the black data. As a result, the right image data or the left image data may represent desired display luminance.

Herein, the Black_max, White_min, and the predetermined insertion data (Specified gray data) value depend on the period of one frame and the response speed of the liquid crystal layer.

The operations of the shutter member 300 and the display devices 100 and 200 are not required to be synchronized in the three dimensional image display device. A specific synchronization signal generator may be used in the display devices for synchronization and the shutter member 300 may utilize a device that turns on/off the lenses in response to the signals. Light may be used, as in infrared (IR) communication, or radio-based local wireless communication, such as Bluetooth, may be used to implement the synchronization of the shutter member 300 and the display devices. Further, various exemplary embodiments may be possible, including connecting the shutter member 300 with the display devices, using wires, for synchronization.

While exemplary embodiments of the present invention have been described in connection with what is presently considered to be practical exemplary embodiments, it is to be understood that the invention is not limited to the disclosed embodiments, but, on the contrary, is intended to cover various modifications and equivalent arrangements within the scope of the claims.

**Claims**

1. A three dimensional image display device, comprising:

   a display device (100) comprising a first region (a) and a second region (b) which are adjacent to each other, the display device (100) alternately displaying a left eye image (101, 102) and a right eye image (101', 102'), and displaying an image having a predetermined gray in a period between the display of the left eye image (101, 102) and the right eye image (101', 102'),
   wherein the display device (100) is adapted to apply, in a current frame, a white data voltage (Vw) to the first region (a) and a corrected white data voltage (Vmw) simultaneously to the second region (b),
   wherein the corrected white data voltage (Vmw) is lower than the white data voltage (Vw),
   wherein the display device (100) comprises a third region (c) and a fourth region (d) which are adjacent to each other,
   wherein the display device (100) is adapted to apply, in the current frame, a black data voltage (VB) to the third region (c) and a corrected black data voltage (VMB) simultaneously to the fourth region (d), and
   wherein the corrected black data voltage (VMB) is larger than the black data voltage (VB);
   **characterized in that**
   the display device (100) is adapted to apply the black data voltage (VB) and the corrected black data voltage (VMB) alternately and repeatedly in the fourth region (d) such that a luminance (Gd) of the fourth region (d) gradually increases according to a response speed of a liquid crystal substance in the display device (100)

2. The three dimensional image display device of claim 1, wherein:

   the predetermined gray is black.

3. The three dimensional image display device of claim 1, wherein:

   in a previous frame that is previous to the current frame, the white data voltage (Vw) is applied to the third region (c) and the black data voltage (VB) is applied to the fourth region (d).

**4.** The three dimensional image display device of claim 1, further comprising:

a shutter member (300) comprising a left eye shutter (31, 31') and a right eye shutter (32, 32').

**5.** The three dimensional image display device of claim 4, wherein:

the black data voltage (VB) is applied to the first region (a) and the white data voltage (Vw) is applied to the second region (b) in a previous frame, in order to achieve that a luminance (La) of the first region (a) which is seen through the shutter member (300) at the current frame and a luminance (Lb) of the second region (b) which is seen through the shutter member (300) at the current frame are substantially the same.

**6.** The three dimensional image display device of claim 4, wherein:

the display device (100) is adapted to apply the white data voltage (Vw) to the third region (c) and the black data voltage (VB) to the fourth region (d) in a previous frame,
in order to achieve that a luminance (Lc) of the third region (c) which is seen through the shutter member (300) at the current frame and a luminance (Ld) of the fourth region (d) which is seen through the shutter member (300) at the current frame are substantially the same.

**Patentansprüche**

**1.** Vorrichtung zum Anzeigen von dreidimensionalen Bildern, umfassend:

eine Anzeigevorrichtung (100), umfassend einen ersten Bereich (a) und einen zweiten Bereich (b), die aneinander angrenzen, wobei die Anzeigevorrichtung (100) abwechselnd ein Bild für das linke Auge (101, 102) und ein Bild für das rechte Auge (101', 102') anzeigt und ein Bild mit einer vorbestimmten Graustufe in einem Zeitraum zwischen der Anzeige des Bilds für das linke Auge (101, 102) und des Bilds für das rechte Auge (101', 102') anzeigt,
wobei die Anzeigevorrichtung (100) dafür ausgelegt ist, in einem aktuellen Rahmen eine Weißdatenspannung (Vw) an den ersten Bereich (a) anzulegen und gleichzeitig eine korrigierte Weißdatenspannung (Vmw) an den zweiten Bereich (b) anzulegen,
wobei die korrigierte Weißdatenspannung (Vmw) niedriger als die Weißdatenspannung (Vw) ist,
wobei die Anzeigevorrichtung (100) einen dritten Bereich (c) und einen vierten Bereich (d) umfasst, die aneinander angrenzen,
wobei die Anzeigevorrichtung (100) dafür ausgelegt ist, in dem aktuellen Rahmen eine Schwarzdatenspannung (VB) an den dritten Bereich (c) anzulegen und
gleichzeitig eine korrigierte Schwarzdatenspannung (VMB) an den vierten Bereich (d) anzulegen, und
wobei die korrigierte Schwarzdatenspannung (VMB) höher als die Schwarzdatenspannung (VB) ist;
**dadurch gekennzeichnet, dass**
die Anzeigevorrichtung (100) dafür ausgelegt ist, die Schwarzdatenspannung (VB) und die korrigierte Schwarzdatenspannung (VMB) abwechselnd und wiederholt im vierten Bereich (d) anzulegen, so dass eine Leuchtdichte (Gd) des vierten Bereichs (d) allmählich in Abhängigkeit von einer Reaktionsgeschwindigkeit einer Flüssigkristallsubstanz in der Anzeigevorrichtung (100) steigt.

**2.** Vorrichtung zum Anzeigen von dreidimensionalen Bildern nach Anspruch 1, wobei:

die vorbestimmte Graustufe schwarz ist.

**3.** Vorrichtung zum Anzeigen von dreidimensionalen Bildern nach Anspruch 1, wobei:

in einem vorherigen Rahmen, der dem aktuellen Rahmen vorangeht, die Weißdatenspannung (Vw) an den dritten Bereich (c) angelegt wird und die Schwarzdatenspannung (VB) an den vierten Bereich (d) angelegt wird.

**4.** Vorrichtung zum Anzeigen von dreidimensionalen Bildern nach Anspruch 1, ferner umfassend:

ein Verschlusselement (300), das einen Verschluss für das linke Auge (31, 31') und einen Verschluss für das rechte Auge (32, 32') umfasst.

**5.** Vorrichtung zum Anzeigen von dreidimensionalen Bildern nach Anspruch 4, wobei:

in einem vorherigen Rahmen die Schwarzdatenspannung (VB) an den ersten Bereich (a) angelegt wird und die Weißdatenspannung (Vw) an den zweiten Bereich (b) angelegt wird, um zu erreichen, dass eine Leuchtdichte (La) des ersten Bereichs (a), die im aktuellen Rahmen durch das Verschlusselement (300) gesehen wird, und eine Leuchtdichte (Lb) des zweiten Bereichs (b), die im aktuellen Rahmen durch das Verschlusselement (300) gesehen wird, im Wesentlichen gleich sind.

**6.** Vorrichtung zum Anzeigen von dreidimensionalen Bildern nach Anspruch 4, wobei:

die Anzeigevorrichtung (100) dafür ausgelegt ist, in einem vorherigen Rahmen die Weißdatenspannung (Vw) an den dritten Bereich (c) anzulegen und die Schwarzdatenspannung (VB) an den vierten Bereich (d) anzulegen, um zu erreichen, dass eine Leuchtdichte (Lc) des dritten Bereichs (c), die im aktuellen Rahmen durch das Verschlusselement (300) gesehen wird, und eine Leuchtdichte (Ld) des vierten Bereichs (d), die im aktuellen Rahmen durch das Verschlusselement (300) gesehen wird, im Wesentlichen gleich sind.


**Revendications**

**1.** Un dispositif d'affichage d'image tridimensionnelle, comprenant :

Un dispositif d'affichage (100) comprenant une première région (a) et une deuxième région (b) qui sont adjacentes l'une à l'autre, le dispositif d'affichage (100) affichant alternativement une image d'oeil gauche (101, 102) et une image d'oeil droit (101' et 102'), et affichant une image ayant un gris prédéterminé dans une période entre l'affichage de l'image d'oeil gauche (101, 102) et l'image de l'oeil droit (101', 102'),
Où le dispositif d'affichage (100) est adapté pour appliquer, dans un cadre actuel, une tension de données blanche (Vw) à la première région (a) et une tension de données blanche corrigée (Vmw) simultanément à la deuxième région (b),
Où la tension de données blanche corrigée (Vmw) est inférieure à la tension de données blanche (Vw),
Où le dispositif d'affichage (100) comprend une troisième région (c) et une quatrième région (d) qui sont adjacentes l'une avec l'autre,
Où le dispositif d'affichage (100) est adapté pour appliquer, dans le cadre actuel,
une tension de données noire (VB) à la troisième région (c) et une tension de données noire corrigée (VMB) simultanément à la quatrième région (d), et
Où la tension de données noire corrigée (VMB) est plus grande que la tension de données noire (VB) ;
**Caractérisé en ce que**
Le dispositif d'affichage (100) est adapté pour appliquer la tension de données noire (VB) et la tension de données noire corrigée (VMB) alternativement et de façon répétée dans la quatrième région (d) de sorte qu'une luminance (Gd) de la quatrième région (d) augmente simultanément selon une vitesse de réponse d'une substance à cristaux liquides dans le dispositif d'affichage (100).

**2.** Le dispositif d'affichage d'image tridimensionnelle de la revendication 1, où :

Le gris prédéterminé est noir.

**3.** Le dispositif d'affichage d'image tridimensionnelle de la revendication 1, où :

Dans un cadre précédent qui est préalable au cadre actuel, la tension de données blanche (Vw) est appliquée à la troisième région (c) et la tension de données noire (VB) est appliquée à la quatrième région (d).

**4.** Le dispositif d'affichage d'image tridimensionnelle de la revendication 1, comprenant de plus :

Un dispositif d'obturation (300) comprenant un obturateur d'oeil gauche (31, 31') et un obturateur d'oeil droit (32, 32').

**5.** Le dispositif d'affichage d'image tridimensionnelle de la revendication 4, où :

La tension de données noire (VB) est appliquée à la première région (a) et la tension de données blanche (Vw) est appliquée à la deuxième région (b) dans un cadre précédent, afin de faire en sorte qu'une luminance (La) de la première région (a) qui est vue au travers du dispositif d'obturation (300) dans le cadre actuel et une luminance (Lb) de la deuxième région (b) qui est vue au travers le dispositif d'obturation (300) dans le cadre actuel sont substantiellement les mêmes.

6. Le dispositif d'affichage d'image tridimensionnelle de la revendication 4, où :

Le dispositif d'affichage (100) est adapté pour appliquer la tension de données blanche (Vw) à la troisième région (c) et la tension de données noire (VB) à la quatrième région (d) dans un cadre précédent,
Afin de faire en sorte qu'une luminance (Lc) de la troisième région (c) qui est vue au travers du dispositif d'obturation (300) dans le cadre réel et une luminance (Ld) de la quatrième région (d) qui est vue au travers du dispositif d'obturation (300) dans le cadre actuel sont substantiellement les mêmes.

FIG.1

## FIG.2

EP 2 456 220 B1

# FIG.3

EP 2 456 220 B1

FIG.4

# FIG.5

FIG.6

FIG.7

FIG.8

FIG.9

# FIG.10

# FIG.11

FIG.12

# FIG.13

# FIG.14

FIG.15

$G_n$ ─────────────────────────────► ┌─────────┐
                                     │   LUT   │ ──────► $G_{cn}$
          ┌──────────┐              └─────────┘
          │  Frame   │ ──────────►
          │  Mem     │ $G_{n-1}$
          └──────────┘

# FIG.16

$G_{n-1}$      $G_n$

$G_{n-1} <$ Black_max     $G_n <$ Black_max
&    OR    &
$G_n >$ White_min     $G_{n-1} >$ White_min

N

Black

Y

Specified gray

**REFERENCES CITED IN THE DESCRIPTION**

**Non-patent literature cited in the description**

- Cancellation of image crosstalk in time-sequential displays of stereoscopic video. **KONRAD et al.** IEEE Transactions on Image Processing. May 2000, vol. 9, 897-908